**Europäisches Patentamt**

**European Patent Office**

**Office européen des brevets**

(19)

(11) Numéro de publication: **0 225 817**
**B1**

(12) # FASCICULE DE BREVET EUROPEEN

(45) Date de publication du fascicule du brevet:
23.08.89

(51) Int. Cl.⁴: **C10K 1/12,** C01B 31/20,
B01D 53/14

(21) Numéro de dépôt: **86402322.1**

(22) Date de dépôt: **16.10.86**

(54) Procédé et installation de traitement à l'ammoniac.

(30) Priorité: **25.10.85 FR 8515864**

(43) Date de publication de la demande:
**16.06.87 Bulletin 87/25**

(45) Mention de la délivrance du brevet:
**23.08.89 Bulletin 89/34**

(84) Etats contractants désignés:
**AT BE CH DE ES FR GB GR IT LI LU NL SE**

(56) Documents cités:
**EP-A- 0 042 041**
**FR-A- 827 143**
**GB-A- 1 069 083**

**INDUSTRIE CHIMIQUE BELGE, vol. XX,
no. 1, janvier 1955, pages 28-34, Bruxelles, BE; V.
AUERBACH: "Procédé d'extraction de l'anhydride
carbonique de gaz de chaufferie au moyen de solutions
ammoniacales"**

(73) Titulaire: **L'AIR LIQUIDE, SOCIETE ANONYME POUR
L'ETUDE ET L'EXPLOITATION DES PROCEDES
GEORGES CLAUDE, 75, Quai d'Orsay, F-75321 Paris
Cédex 07(FR)**

(72) Inventeur: **Brugerolle, Jean-Renaud, 9, rue des Bauches,
F-75016 Paris(FR)**
Inventeur: **Combe, Michel, Les Marronniers 3, avenue
du 11 novembre 1918, F-92190 Meudon(FR)**
Inventeur: **Paganessi, Joseph, 1432 Tomlin Drive, Burr
Ridge Illinois 60.521(US)**

(74) Mandataire: **Sadones Laurent, Renée et al, L'AIR
LIQUIDE 75, quai d'Orsay, F-75321 Paris Cédex 07(FR)**

## Description

La presente invention est relative à la technique du traitement des gaz à l'ammoniac. Elle s'applique en particulier à la récupération de $CO_2$ à partir de fumées relativement pauvres en $CO_2$ telles que les fumées de combustion, qui en contiennent 8 à 20%, ou les fumées de cimenteries ou de fours à chaux, qui en contiennent 20 à 50%. Elle peut ainsi s'appliquer à d'autres types de traitements de gaz disponibles à température élevée, par exemple à l'épuration de gaz acides, notamment de fumées contenant des impuretés $SO_x$, $NO_x$ ou HCL, avant leur rejet dans l'atmosphère ou leur traitement ultérieur par PSA (Pressure Swing Adsorption).

Dans les pays industriels, la production du $CO_2$ s'est développée le plus souvent à partir de sources industrielles ou naturelles "riches" en $CO_2$ (97%) et contenant très peu d'impuretés, ce qui conduit à un $CO_2$ relativement bon marché.

La décroissance du nombre des sources chimiques dans ces pays, notamment des usines d'ammoniac, conduit à envisager la production de $CO_2$ à partir des sources "pauvres" en $CO_2$, telles que les fumées citées ci-dessus.

Dans ce domaine de la récupération du $CO_2$ comme dans les autres applications précitées, l'ammoniac est un agent d'absorption intéressant par ses propriétés et son coût modéré, mais qui pose un problème difficile en ce qui concerne le rejet gazeux de l'installation. En effet, ce rejet contient une teneur relativement importante en ammoniac, et il est nécessaire de le récupérer tant pour des raisons économiques que pour éviter la pollution de l'environnement.

L'invention a pour but de fournir un procédé et une installation permettant de résoudre ce problème de façon particulièrement économique.

A cet effet, l'invention a pour objet un procédé de traitement à l'ammoniac d'un gaz disponible à température élevée, caractérisé en ce qu'on élimine l'ammoniac d'un effluent gazeaux du traitement par lavage au moyen d'un liquide constitué essentiellement par de l'eau, on régénère le liquide de lavage par distillation à contre-courant du gaz à traiter, puis on recycle au moins l'essentiel du liquide de lavage régénéré en le mettant en relation d'échange thermique avec le liquide de lavage à régénérer.

Ainsi, c'est le gaz à traiter lui-même, par l'énergie qu'il contient, qui assure la régénération de l'eau de lavage et, simultanément, se refroidit en favorisant son propre traitement par l'ammoniac.

Si le traitement à l'ammoniac présente au moins une réaction à cinétique lente, comme c'est le cas pour l'absorption du $CO_2$, suivant un premier mode de mise en oeuvre de l'invention, en aval de ladite distillation, on fait circuler le gaz à traiter dans un appareil d'absorption alimenté par une solution ammoniacale, puis on élimine l'ammoniac de l'effluent gazeux de cet appareil par ledit lavage.

Dans ce cas, de façon avantageuse, on désorbe par réduction de pression l'effluent liquide sortant de l'appareil d'absorption.

Si au contraire la réaction visée est suffisamment rapide, comme c'est le cas pour l'épuration des fumées acides, suivant un autre mode de mise en oeuvre de l'invention, en aval de ladite distillation; on soumet directement le gaz audit lavage, de sorte que ledit traitement à l'ammoniac est constitué par ladite régénération du liquide de lavage. La fumée peut être ensuite soumise, si nécessaire, à un traitement qui présente au moins une réaction à cinétique lente, telle qu'une décarbonatation.

L'invention a également pour objet une installation destinée à la mise en oeuvre du procédé ci-dessus. Cette installation comprend une tour de lavage alimentée à sa base par l'effluent gazeux de l'appareil de traitement à l'ammoniac et à son sommet par un liquide constitué essentiellement par de l'eau, un appareil de distillation dont le sommet est relié par une première conduite à la base de la tour de lavage et qui est alimenté à sa base par le gaz à traiter, et une conduite de recyclage, en relation d'échange thermique avec ladite première conduite, qui relie la base de l'appareil de distillation au sommet de la tour de lavage.

Deux exemples de mise en oeuvre de l'invention vont maintenant être décrits en regard des dessins annexés, sur lesquels :

- la figure 1 représente schématiquement une installation de récupération de $CO_2$ conforme à l'invention ; et
- la figure 2 est une vue analogue d'une installation d'épuration de fumée conforme à l'invention.

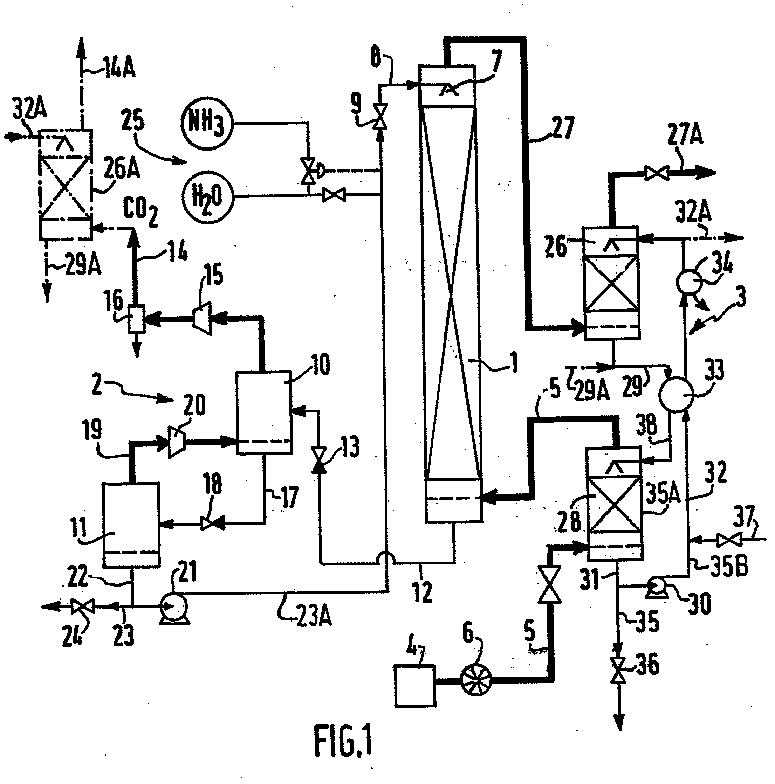

L'installation illustrée à la figure 1 comprend essentiellement une colonne d'absorption 1, un dispositif de désorption sous vide 2 et une unité de lavage à l'eau 3. Sur le dessin, on a indiqué en traits fins les courants liquides et en traits épais les courants gazeux.

La colonne d'absorption 1 est alimenté à sa base par de la fumée provenant d'une source 4 par l'intermédiaire d'une conduite 5 pourvue d'une soufflante ou ventilateur 6. Dans la colonne 1, cette fumée monte à contre-courant d'une solution ammoniacale qui en absorbe de $CO_2$, ce à une température voisine de la température ambiante (par exemple de l'ordre de 10 à 30°C) et à une pression voisine de la pression atmosphérique.

La solution ammoniacale est amenée à un dispositif distributeur 7 disposé en tête de la colonne 1 par une conduite 8 équipée d'une vanne de régulation de débit 9.

Le dispositif 2 de désorption ou de régénération sous vide comprend essentiellement deux pots de détente 10, 11. Le premier pot 10 est relié à la cuve de la colonne 1 par une conduite 12 pourvue d'une vanne de détente 13 ; du sommet de ce pot part une conduite de production 14 équipée d'une pompe à vide 15 et, en aval de celle-ci, d'un séparateur de phases 16. Le fond du pot 10 est relié au pot 11 par une autre conduite 17 pourvue d'une vanne de détente 18, tandis que le sommet du pot 11 est relié au pot 10 par une conduite 19 équipée d'une pompe à vide 20.

Ainsi, on peut maintenir dans le pot 10 un premier niveau de dépression, par exemple une pression absolue de 200 mm Hg (environ 26000 Pa), qui constitue la pression d'aspiration de la pompe 15, laquelle refoule vers le séparateur 16 à peu près à la pression atmosphérique, et l'on peut maintenir dans le pot 11 un second niveau de dépression plus bas, par exemple une pression absolue de 100 mm Hg (environ 13000 Pa), la pompe 20 aspirant à cette pression et refoulant à 200 mm Hg (environ 26000 Pa).

Une pompe de recirculation 21 comporte un orifice d'aspiration relié au fond du pot 11 par une conduite 22, et un orifice de refoulement relié à la conduite 8. Une dérivation de soutirage 23 pourvue d'une vanne 24 est piquée sur conduite 22, et un dispositif 25 d'amenée de solution ammoniacale de complément à la teneur désirée est piquée sur la conduite 8.

L'unité de lavage 3 comprend une colonne 26 de lavage interposée dans une conduite 27 d'évacuation de l'effluent gazeux produit en tête de la colonne 1, et une colonne 28 de régénération de l'eau de lavage interposée dans la conduite 5 d'amenée de la fumée à traiter.

Le fond de la colonne 26 est relié au sommet de la colonne 28 par une conduite 29, tandis que le fond de la colonne 28 est relié à l'aspiration d'une pompe de recyclage 30 par une conduite 31, le refoulement de cette pompe étant relié au sommet de la colonne 26 par une conduite 32. Les conduites 29 et 32 sont mises en relation d'échange thermique par un échangeur de chaleur 33, et la conduite 32 est équipée, en aval de ce dernier, d'un refroidisseur complémentaire 34 à eau ou à air. Une dérivation de soutirage 35 pourvue d'une vanne 36 est piquée sur la conduite 31, et une conduite 37 d'amenée d'eau de complément est piquée sur la conduite 32.

L'installation ainsi décrite fonctionne de la façon suivante.

Après passage à travers la colonne 1, la solution ammoniacale, enrichie en $CO_2$, est soutirée de la cuve de cette colonne par la conduite 12, détendue dans la vanne 13 et pénètre dans le pot 10. Cette détente produit un flash, et le liquide restant passe dans le pot 11 via la conduite 17 en subissant une seconde détente, et donc un nouveau flash, dans la vanne 18.

Le liquide restant dans le pot 11 est recyclé par la pompe 21 vers la colonne 1 via les conduites 22 et 8. Le gaz de flash produit dans le pot 11 est renvoyé par la pompe 20, via la conduite 19, dans le pot 10, où une partie de l'eau et de l'ammoniac qu'il contenait est condensée. Le gaz restant et le gaz de flash produit dans le pot 10 sont évacués ensemble par la pompe 15, via la conduite 14 ; la compression assurée par cette pompe permet d'en séparer l'eau et l'ammoniac sous forme liquide dans le séparateur 16, et c'est du gaz contenant plus de 99 % de $CO_2$, constituant le produit de l'installation, qui quitte le séparateur pour être ultérieurement traité de façon classique. On remarque que la chaleur de compression de la pompe 20 est récupérée dans le pot 10 pour améliorer la désorption, et que le pot 10 sert de réfrigérant pour la pompe. Pair ailleurs, on comprend que plus le nombre de flashes est élevé, plus l'énergie nécessaire pour la recompression est faible, car on s'approche alors d'autant plus d'un processus réversible, au prix évidemment d'un supplément d'investissement.

Une faible partie du débit liquide passant par la conduite 22 peut être éliminée si nécessaire par la conduite 23 pour éviter la concentration de la solution en produits de réaction de l'ammoniac avec les impuretés $SO_x, NO_x$ lorsque celles-ci sont présentes dans la fumée initiale. Dans ce cas, un débit identique de complément est fourni par le dispositif 25.

Après décarbonatation dans la colonne 1, la fumée contient par exemple 0,5 à 3 % d'ammoniac, du fait de la pression partielle de l'ammoniac au-dessus de la solution. Il est donc nécessaire d'épurer cet effluent et, pour cela, le gaz de tête de la colonne 1 est envoyé à travers la canalisation 27 vers la colonne de lavage 26, où pratiquement tout l'ammoniac est absorbé par l'eau arrivant en tête de colonne par la conduite 32, avec un débit de l'ordre de 5 à 10 % de celui de la solution ammoniacale qui alimente la colonne 1. Le gaz décarbonaté qui quitte la colonne 26 et est évacué à l'atmosphère en 27A respecte ainsi les normes admissibles pour la teneur en ammoniac. L'eau de lavage légèrement chargée en ammoniac quitte la colonne 26 par la conduite 29 et, après avoir été réchauffée dans l'échangeur 33, traverse de haut en bas la colonne 28, où elle est régénérée par distallation grâce au chauffage assuré par la fumée circulant dans la conduite 5 et de bas en haut dans la colonne 28, cette fumée étant initialement à une température élevée, généralement supérieure à 150°C. Ainsi, la colonne 28 sert à la fois à refroidir la fumée de la source 4, ce qui est favorable à l'absorption dans la colonne 1, et à régénérer l'eau de lavage de l'effluent gazeux de l'installation, ce qui permet de récupérer l'ammoniac absorbé par l'eau et en même temps d'éviter la pollution de l'environnement.

L'eau chaude régénérée recueille en cuve de la colonne 28 est recyclée par la pompe 30 via les conduites 31 et 32, prérefroidie dans l'échangeur 33 et refroidie jusqu'au voisinage de la température ambiante dans l'échangeur 34. Une faible partie du débit d'eau peut de nouveau être éliminée, si nécessaire, par la conduite 35, pour éviter la concentration en impuretés SOx, NOx, l'eau de complément étant fournie par la conduite 37.

A titre d'exemple numérique, en partant d'une fumée à 180°C constituée de 25 % de $CO_2$, 7 % d'eau, 4 % d'oxygène et 64 % d'inertes et en utilisant une colonne 1 à trois plateaux théoriques alimentée par une solution à 4 moles d'ammoniac par litre, on peut atteindre un rendement d'extraction en $CO_2$ de l'ordre de 50 à 90 %, l'énergie spécifique dépensée étant entièrement sous forme électrique (soufflante 6, pompes de circulation 21 et 30, pompes à vide 15 et 20) et étant très inférieure à celle des procédés classiques de récupération de $CO_2$ à partir de sources analogues. Le débit d'eau de lavage est de l'ordre de 5 à 10 % du débit de la solution ammoniacale. Il est à noter à ce sujet que le faible débit d'eau de lavage nécessaire par rapport au débit de la solution ammoniacale (et donc par rapport au débit du gaz à traiter) est avantageux sous plusieurs aspects : d'une part, la puissance de la pompe 30 est faible ; d'autre part, la chaleur fournie par la fumée suffit pour régénérer efficacement l'eau de lavage et, par suite, pour obtenir un très faible rejet d'ammoniac à l'atmosphère par la canalisation 27 A.

On peut également noter que, dans les cas fréquents où la fumée contient des impuretés SOx, NOx, ces impuretés réagissent avec l'ammoniac pour donner en 23 et 36 des sous-produits avantageux. En effet, la réaction avec SOx et NOx forme des sous-produits utilisables comme engrais.

Comme indiqué sur la figure 1, plusieurs variantes peuvent être envisagées :
- La purge 23 peut être piquée en 23A sur la conduite 8, c'est-à-dire sur le côté haute pression de la pompe 21.
- De même, la purge 35 peut être piquée en 35A dans la tour 28, ou en 35 B en aval de la pompe 30.
- Si nécessaire, l'ammoniac résiduel contenu dans le $CO_2$ produit peut être éliminé de la même manière que celui contenu dans l'effluent gazeux de la colonne 1, afin d'éviter la formation de carbonates insolubles au cours de la compression ultérieure du $CO_2$ en vue de sa liquéfaction. Pour cela, comme indiqué en trait mixte sur la figure 1, on fait déboucher la conduite de production 14 à la base d'une seconde tour de lavage 26A alimentée en tête par une conduite 32A piquée sur la conduite 32 en aval de l'échangeur de chaleur 34. Le $CO_2$ épuré sort du sommet de la tour 26A par une conduite 14A, tandis que le liquide de cuve de cette tour rejoint par une conduite 29A la conduite 29 en amont de l'échangeur de chaleur 33.
- Un appoint de solution ammoniacale peut être introduit en 38 dans la conduite 29 afin d'éviter que les impuretés acides telles que $SO_X$ et $NO_X$ ne pénètrent dans la tour 1.

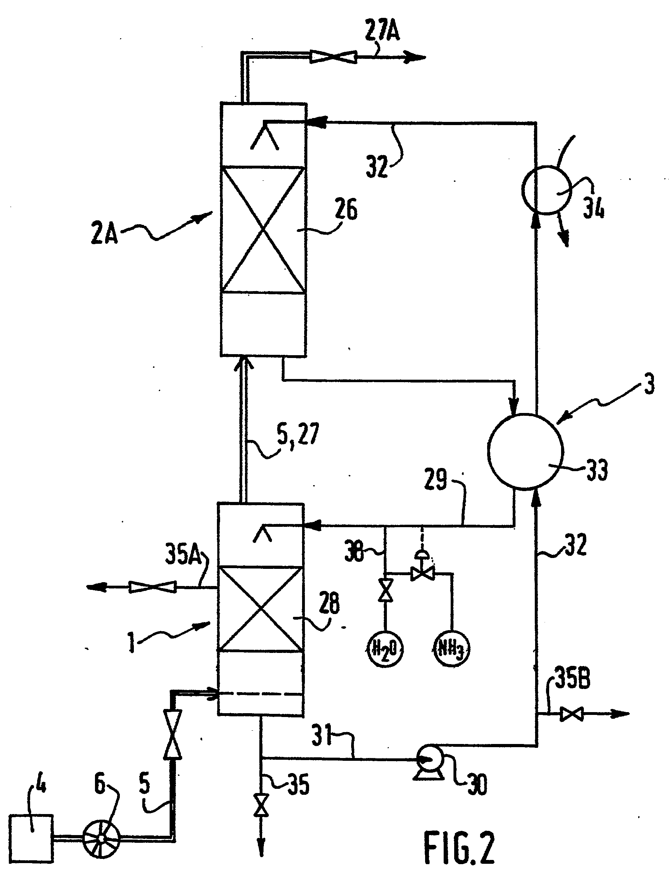

La figure 2 représente le schéma d'une installation analogue correspondant au cas où le traitement à l'ammoniac ne comprend que des réactions à cinétique rapide. Ce traitement a lieu dans la colonne 28 elle-même, qui est donc confondue avec l'appareil 1, tandis que la désorption s'effectue dans la tour 26, laquelle est donc confondue avec le dispositif de désorption 2A. Pour cela, la conduite 5 relie directement le sommet de la colonne 28 à la base de la tour 26 et est donc confondue avec la conduite 27 qui véhicule l'effluent gazeux du traitement à l'ammoniac.

Par ailleurs, un appoint de solution ammoniacale est effectué en 38 dans la conduite 29, en aval de l'échangeur de chaleur 33, pour contrôler le traitement dans la colonne 28. Pour cela, à un débit d'eau d'appoint constant est ajouté un débit d'ammoniac réglé par un analyseur de la teneur en ammoniac de l'eau circulant dans la conduite 29. Le soutirage 35A a lieu, dans l'exemple représenté, dans la partie supérieure de la colonne 28.

L'installation de la figure 2 fonctionne de la manière suivante.

La fumée à traiter, provenant à haute température de la source 4, est légèrement comprimée par le ventilateur 6 et envoyée à la base de la colonne de distillation 28 à travers la conduite 5. La fumée permet de régénérer, grâce à la chaleur qu'elle contient, l'eau chargée en ammoniac qui arrive en tête de la colonne 28 par la canalisation 29, en provenance de la tour de lavage. La solution régénérée quitte le bas de la colonne 28 par la conduite 31 et est recyclée par la pompe 30 vers la colonne 26 à travers la conduite 32, via les échangeurs de chaleur 33 et 34. La température régnant dans la colonne 28 est légèrement supérieure à l'ambiante, par exemple de l'ordre de 30 à 50°C.

Dans le même temps, les impuretés de la fumée (SOx et NOx) réagissent avec la solution ammoniacale diluée dans la partie haute de la colonne 28. Une faible partie du débit liquide est soutiré de la colonne 28 par la conduite 35, 35A ou 35B, afin d'éliminer les impuretés de la fumée ainsi absorbées.

La fumée quitte la colonne 28, purifiée en NOx et SOx, mais chargée en vapeur d'ammoniac, et alimente le bas de la colonne 26. La fumée contient alors par exemple 0,5 à 3% d'ammoniac, qui va être absorbé dans la tour 26 par la solution régénérée froide, constituée d'eau presque pure, qui arrive en tête de cette tour et est mise en contact avec la fumée à contre-courant, ce à une température voisine de l'ambiante (par exemple 10 à 40°C).

La fumée purifiée en ammoniac quitte le sommet de la tour 26 par la canalisation 27A, en vue de son rejet à l'atmosphère ou de son traitement ultérieur. La fumée peut, par exemple, être ensuite décarbonatée par un système P.S.A., dont la présence de SOx, NOx et $NH_3$ dans la fumée auraient gravement diminué les performances.

La solution de lavage chargée en ammoniac quitte la colonne 26 par la canalisation 29 et, après avoir été réchauffée dans l'échangeur 33, alimente le haut de la colonne 28, qu'elle traverse de haut en bas à contre-courant de la fumée à traiter.

A titre d'exemple numérique, en partant d'une fumée à 180°C constituée de 25% de $CO_2$, 7% d'eau, 4% d'oxygène et 64% d'inertes, contenant 150 ppm (en volume) de SOx et 1500 ppm (en volume) de NOx, et en utilisant une solution ammoniacale de 0,2 à 0,5 mole par litre dans la colonne de distillation 28, on peut obtenir, après traitement du gaz par l'installation de la figure 2, une fumée contenant moins de 100 ppm de $NH_3$ et moins de 10 ppm de SOx et NOx.

L'invention s'applique au traitement à l'ammoniac de divers mélanges gazeux disponibles à haute température, qu'ils soient à une pression voisine de la pression atmosphérique ou à une pression supérieure.

## Revendications

1. Procédé de traitement à l'ammoniac d'un gaz disponible à température élevée, notamment supérieure à 150°C, caractérisé en ce qu'on élimine l'ammoniac d'un effluent gazeux du traitement par lavage au moyen d'un liquide constitué essentiellement par de l'eau, on régénère le liquide de lavage par distillation à contre-courant du gaz à traiter, ce dernier fournissant l'énergie thermique nécessaire à la régénération, puis on recycle au moins l'essentiel du liquide de lavage régénéré en le mettant en relation d'échange thermique avec le liquide de lavage à régénérer.

2. Procédé suivant la revendication 1, caractérisé en ce qu'on soutire du liquide d'une région intermédiaire (35A) de l'appareil de distillation (28).

3. Procédé suivant l'une des revendications 1 et 2, caractérisé en ce qu'on ajuste la teneur en ammoniac du liquide de lavage à régénérer par adjonction à ce liquide d'une solution ammoniacale d'appoint (38).

4. Procédé suivant l'une quelconque des revendications 1 à 3, caractérisé en ce qu'en aval de ladite distillation, on fait circuler la gaz à traiter dans un appareil d'absorption (1) alimenté par une solution ammoniacale, puis on élimine l'ammoniac de l'effluent gazeux de cet appareil par ledit lavage.

5. Procédé suivant la revendication 4, caractérisé en ce qu'on désorbe par réduction de pression l'effluent liquide sortant de l'appareil d'absorption (1).

6. Procédé suivant la revendication 5, caractérisé en ce que la réduction de pression comprend au moins deux étages successifs (10, 11), le gaz de flash issu de chaque étage de préférence renvoyé à l'étage précédent.

7. Procédé suivant l'une quelconque des revendications 4 à 6, caractérisé en ce qu'on recycle vers l'appareil d'absorption (1) au moins l'essentiel du liquide désorbé.

8. Procédé suivant l'une quelconque des revendications 4 à 7, caractérisé en ce qu'après avoir désorbé l'effluent liquide sortant de l'appareil d'absorption (1), on élimine l'ammoniac du gaz désorbé de la même manière que de l'effluent gazeux de l'appareil d'absorption.

9. Procédé suivant l'une quelconque des revendications 1 à 3, caractérisé en ce qu'en aval de ladite distillation, on soumet directement le gaz audit lavage, de sorte que ledit traitement à l'ammoniac est constitué par ladite régénération du liquide de lavage.

10. Installation de traitement à l'ammoniac d'un gaz disponible à température élevée, caractérisée en ce qu'elle comprend une tour de lavage (26) alimentée à sa base par l'effluent gazeux de l'appareil de traitement à l'ammoniac (1) et à son sommet par un liquide constitué essentiellement par de l'eau, un appareil de distillation (28) dont le sommet est relié par une première conduite (29) à la base de la tour de lavage et qui est alimenté à sa base par le gaz à traiter, une conduite de recyclage (32), en relation d'échange thermique avec ladite première conduite (29), qui relie la base de l'appareil de distillation (28) au sommet de la tour de lavage (26), et des moyens (12; 35, 35A, 35B) de soutirage de liquide hors de l'appareil de traitement à l'ammoniac (1).

11. Installation suivant la revendication 10, caractérisée en ce qu'elle comporte en outre des moyens (34) de refroidissement complémentaire du liquide véhicule par la conduite de recylage (32).

12. Installation suivant l'une des revendications 10 et 11, caractérisée en ce que l'appareil de traitement à l'ammoniac est un appareil d'absorption (1) distinct dudit appareil de distillation (28) et alimenté par le gaz de tête de ce dernier.

13. Installation suivant la revendication 11, caractérisée en ce qu'elle comprend un pot de désorption sous vide (10) comportant une entrée reliée à la sortie liquide de l'appareil d'absorption (1) par l'intermédiaire d'une vanne de détente (13) et une sortie reliée à l'aspiration d'une pompe à vide (15).

14. Installation suivant la revendication 13, caractérisée en ce qu'elle comprend au moins un second port de désorption sous vide plus poussé (11) comportant une entrée reliée à la sortie de liquide du pot précédent (10) et une sortie reliée à ce dernier par l'intermédiaire d'une pompe à vide (20).

15. Installation suivant l'une des revendications 13 et 14, caractérisée en ce que la sortie de liquide du dernier pot de désorption (11) est reliée à l'appareil d'absorption (1) par l'intermédiaire d'une conduite (22, 8) équipée d'une pompe de recyclage (21).

16. Installation suivant l'une quelconque des revendications 12 à 15, caractérisée en ce qu'elle comprend un dispositif de désorption (2) produisant un gaz de désorption, et une deuxième tour de lavage (26A) fonctionnant de la même façon que le première (26) mais alimentée à sa base par ledit gaz de désorption.

17. Installation suivant l'une des revendications 10 et 11, caractérisée en ce que ledit appareil de traitement à l'ammoniac est constitué par ledit appareil de distillation (28).

**Patentansprüche**

1. Verfahren zur Ammoniakbehandlung eines mit hoher, insbesondere über 150°C liegender Temperatur dargebotenen Gases, dadurch gekennzeichnet, daß das Ammoniak aus einem gasförmigen Abgang der Behandlung durch Waschen mittels einer hauptsächlich aus Wasser bestehenden Flüssigkeit entfernt wird, daß die Waschflüssigkeit durch Destillation im Gegenstrom zu dem im behandelnden Gase regeneriert wird, welch letzteres die für die Regenerierung erforderliche Wärmeenergie liefert, und daß dann mindestens der größte Teil der regenerierten Waschflüssigkeit im Kreislauf geführt wird, wobei sie in Wärmeaustauschbeziehung mit der zu regenerierenden Waschflüssigkeit gebracht wird.

2. Verfahren nach Anspruch 1, dadurch gekennzeichnet, daß Flüssigkeit aus einem Zwischenbereich (35A) des Destillationsgeräts (28) abgezogen wird.

3. Verfahren nach einem der Ansprüche 1 und 2, dadurch gekennzeichnet, daß der Ammoniakgehalt der zu regenerierenden Waschflüssigkeit durch Zugabe einer zusätzlichen ammoniakalischen Lösung (38) eingestellt wird.

4. Verfahren nach einem der Ansprüche 1 bis 3, dadurch gekennzeichnet, daß stromab von der genannten Destillation das zu behandelnde Gas in einem Absorptionsgerät (1) umgewälzt wird, dem eine ammoniakalische Lösung zugeführt wird, und daß dann das Ammoniak des gasförmigen Abgangs dieses Geräts durch den genannten Waschvorgang entfernt wird.

5. Verfahren nach Anspruch 4, dadurch gekennzeichnet, daß der aus dem Absorptionsgerät (1) austretende flüssige Ablauf durch Druckminderung desorbiert wird.

6. Verfahren nach Anspruch 5, dadurch gekennzeichnet, daß die Druckminderung in mindestens zwei aufeinanderfolgenden Stufen (10, 11) erfolgt, wobei das aus jeder Stufe durch Desorption hervorgegangene Flash-Gas vorzugsweise in die vorhergehende Stufe zurückgeführt wird.

7. Verfahren nach einem der Ansprüche 4 bis 6, dadurch gekennzeichnet, daß zumindest der größte Teil der desorbierten Flüssigkeit im Kreislauf in das Absorptionsgerät (1) zurückgeführt wird.

8. Verfahren nach einem der Ansprüche 4 bis 7, dadurch gekennzeichnet, daß nach der Desorption des aus dem Absorptionsgerät (1) austretenden flüssigen Abgangs, der Ammoniak des desorbierten Gases in gleicher Weise entfernt wird wie aus dem gasförmigen Abgang des Absorptionsgeräts.

9. Verfahren nach einem der Ansprüche 1 bis 3, dadurch gekennzeichnet, daß stromab von der genannten Destillation das Gas unmittelbar dem genannten Waschvorgang unterworfen wird, so daß die genannte Ammoniakbehandlung durch die genannte Regenerierung der Waschflüssigkeit dargestellt wird.

10. Anlage zur Ammoniakbehandlung eines mit hoher Temperatur dargebotenen Gases, dadurch gekennzeichnet, daß sie einen Waschturm (26) aufweist, in den an seiner Basis der gasförmige Abgang des Geräts (1) zur Ammoniakbehandlung und an seinem oberen Ende eine im wesentlichen aus Wasser bestehende Flüssigkeit eintritt, ferner ein Destillationsgerät (28), dessen oberes Ende durch eine erste Leitung (29) mit der Basis des Waschturms verbunden ist und dem an seiner Basis das zu behandelnde Gas zugeführt wird, eine in Wärmeaustausch mit der genannten ersten Leitung (29) stehende Kreislaufleitung (32), die die Basis des Destilliergeräts (28) mit dem oberen Ende des Waschturms (26) verbindet, sowie Mittel (12; 35, 35A, 35B) zum Abziehen von Flüssigkeit aus dem Gerät (1) zur Ammoniakbehandlung.

11. Anlage nach Anspruch 10, dadurch gekennzeichnet, daß sie außerdem eine Einrichtung (34) zum zusätzlichen Kühlen der in der Kreislaufleitung (32) geförderten Flüssigkeit aufweist.

12. Anlage nach einem der Ansprüche 10 und 11, dadurch gekennzeichnet, daß das Gerät zur Ammoniakbehandlung ein von dem ganannten Destillationsgerät (28) getrenntes Absorptionsgerät (1) ist, das von dem Gas aus dem Kopfende des Destillationsgeräts gespeist wird.

13. Anlage nach Anspruch 11, dadurch gekennzeichnet, daß ein Vakuumdesorptionstopf (10) vorgesehen ist, dessen Eingang mit dem Flüssigkeitsausgang des Absorptionsgeräts (1) über ein Druckminderventil (13) verbunden ist und dessen Ausgang mit der Saugseite einer Vakuumpumpe (15) verbunden ist.

14. Anlage nach Anspruch 13, dadurch gekennzeichnet, daß mindestens ein zweiter, unter höherem Vakuum stehender Desorptionstopf (11) vorgesehen ist, dessen Eingang mit dem Flüssigkeitsausgang des vorhergehenden Topfs (10) verbunden ist und dessen Ausgang mit diesem über eine Vakuumpumpe (20) verbunden ist.

15. Anlage nach einem der Ansprüche 13 und 14, dadurch gekennzeichnet, daß der Flüssigkeitsausgang des letzten Desorptionstopfs (11) über eine mit einer Umwälzpumpe (21) versehene Leitung (22, 8) mit dem Absorptionsgerät (1) verbunden ist.

16. Anlage nach einem der Ansprüche 12 bis 15, dadurch gekennzeichnet, daß eine ein Desorptionsgas erzeugende Desorptionsvorrichtung (2) vorgesehen ist sowie ein zweiter Waschturm (26A), der ebenso arbeitet wie der erste Turm (26), an seiner Basis aber das genannte Desorptionsgas aufnimmt.

17. Anlage nach einem der Ansprüche 10 und 11, dadurch gekennzeichnet, daß das genannte Gerät zur Ammoniakbehandlung von dem genannten Destillationsgerät (28) gebildet wird.

## Claims

1. Process for treating with ammonia, a gas available at high temperature, especially above 150°C, characterized in that the ammonia is eliminated from a gaseous effluent of the treatment by washing by means of a liquid consisting essentially of water, the washing liquid is regenerated by distillation in counterflow of the gas to be treated, this latter providing the thermal energy required for the regeneration, then at least the bulk of the regenerated washing liquid is recycled by placing it in a heat exchange relationship with the washing liquid to be regenerated.

2. Process according to Claim 1, characterized in that liquid is withdrawn from an intermediate region (35A) of the distillation unit (28).

3. Process according to one of Claims 1 and 2, characterized in that the ammonia content of the washing liquid to be regenerated is adjusted by the addition to this liquid of an ammoniated topping-up solution (38).

4. Process according to any one of Claims 1 to 3, characterized in that downstream of the said distillation, the gas to be treated is caused to circulate in an absorption unit (1) supplied with an ammoniacal solution, after which the ammonia is eliminated from the gaseous effluent of this unit by means of the said washing.

5. Process according to Claim 4, characterized in that the liquid effluent issuing from the absorption unit (1) is desorbed by reduction of pressure.

6. Process according to Claim 5, characterized in that the pressure reduction includes at least two successive stages (10, 11) the "flash" gas emerging from each stage preferably being returned to the preceding stage.

7. Process according to any one of Claims 4 to 6, characterized in that at least the bulk of the desorbed liquid is recycled towards the absorption unit (1).

8. Process according to any one of Claims 4 to 7, characterized in that after the liquid effluent issuing from the absorption unit (1) has been desorbed, the ammonia is eliminated from the desorbed gas in the same manner as from the gaseous effluent of the absorption unit.

9. Process according to any one of Claims 1 to 3, characterized in that downstream of the said distillation, the gas is exposed directly to the said washing, so that the said ammonia treatment is constituted by the said regeneration of the washing liquid.

10. Plant for the treatment with ammonia of a gas available at high temperature, characterized in that it comprises a washing column (26) supplied at its base with the gaseous effluent of the ammonia treatment plant (1) and at its top with a liquid consisting essentially of water, a distillation unit (28) the top of which is connected via a first duct (29) to the base of the washing column and which is supplied at its base with the gas to be processed, a recycling duct (32), in a heat exchange relationship with the said first duct (29), which connects the base of the distillation unit (28) to the top of the washing column (26), and means (12; 35, 35A, 35B) for withdrawing liquid from the plant (1) for treatment with ammonia.

11. Plant according to claim 10, characterized in that it also comprises means (34) for complementary cooling of the liquid carried by the recycling duct (32).

12. Plant according to one of the Claims 10 and 11, characterized in that the plant for treatment with ammonia is an absorption unit (1) separate from the said distillation unit (28) and supplied with the head gas from the latter.

13. Plant according to Claim 11, characterized in that it comprises a vessel (10) for desorption under vacuum having an inlet connected to the liquid outlet from the absorption unit (1) via an expansion valve (13) and an outlet connected to the intake of a vacuum pump (15).

14. Plant according to Claim 13, charcterized in that it comprises at least one second vessel (11) for desorption under a higher vacuum comprising an inlet connected to the liquid outlet of the preceding vessel (10) and an outlet connected to the latter via a vacuum pump (20).

15. Plant according to one of Claims 13 and 14, characterized in that the liquid outlet of the last desorption vessel (11) is connected to the absorption unit (1) via a duct (22, 8) equipped with a recycling pump (21).

16. Plant according to any one of Claims 12 to 15, characterized in that it comprises a desorption device (2), producing a desorption gas, and a second washing column (26A) operating in the same way as the first (26) but supplied at its base with the said desorption gas.

17. Plant according to one of Claims 10 and 11, characterized in that the said ammonia treatment device is formed by the said distillation unit (28).

EP 0 225 817 B1

FIG.1

FIG.2